# EUROPEAN PATENT APPLICATION

(11) **EP 4 679 379 A1**
(43) Date of publication of application: **14.01.2026**
(21) Application number: 24770668.2
(22) Date of filing: 06.03.2024
(51) Int. Cl.: G06T 17/00

(54) **THREE-DIMENSIONAL POINT CLOUD ALIGNING DEVICE, METHOD, AND PROGRAM**

(30) Priority: 10.03.2023 JP 2023038131
(71) Applicant: OMRON Corporation, Kyoto-shi, Kyoto 600-8530 (JP)
(72) Inventor: OSHIRO, Atsushi, Kyoto-shi, Kyoto 600-8530 (JP)
(74) Representative: SONN Patentanwälte GmbH & Co KG
(86) International application number: PCT/JP2024/008490
(87) International publication number: WO 2024/190559

(57) **Abstract**

An acquisition unit (32) acquires plural sets of three-dimensional point cloud data that are respective sensing results from plural sensors that detect three-dimensional positions of points in a peripheral environment. An accepting unit (34) displays each of three-dimensional images representing each of the plurality of sets of three-dimensional point cloud data on a screen. The accepting unit (34) accepts a designation in each of the three-dimensional images of an area that serves as a reference for alignment between the plural sets of three-dimensional point cloud data. An adjusting unit aligns partial sets of three-dimensional point cloud data with one another, the partial sets of three-dimensional point cloud data corresponding to the area in each of the plurality of sets of three-dimensional point cloud data.

## Description

### TECHNICAL FIELD

The present disclosure relates to a three-dimensional point cloud aligning device, a three-dimensional point cloud aligning method, and a three-dimensional point cloud aligning program.

### BACKGROUND ART

Heretofore, technologies have been proposed that align sensing results from plural sensors such as cameras or the like. For example, a camera system has been proposed that utilizes a common field of view of each of clusters to calculate positions and attitudes of cameras in a specified cluster coordinate system, and that calculates a position of an object in a local coordinate system from images from plural cameras in each cluster. The system specifies an integrated coordinate system in which relative positional relationships of the cluster coordinate systems are adjusted by obtaining predetermined errors in the positions and attitudes of shared cameras between neighboring clusters, and converts the position of the object in the cluster coordinate system to the integrated coordinate system (Patent Document 1).

### Related Art References

### Patent References

Patent Document 1: Japanese Patent Application Laid-Open (JP-A) No. 2013-093787

### SUMMARY OF INVENTION

### TECHNICAL PROBLEM

When plural sets of three-dimensional point cloud data sensed by plural sensors in an environment are being aligned with one another, generally, a feature point is extracted from each set of three-dimensional point cloud data and the feature point is associated between the sets of three-dimensional point cloud data. However, when plural similar items are present in an environment, such as desks, displays or the like, errors may occur when associating the feature point and the alignment may fail. Particularly in a factory, in the context of mass production of the same product, plural similar items are often present in that environment.

An object of the present disclosure is to improve accuracy of alignment between plural sets of three-dimensional point cloud data.

### SOLUTION TO PROBLEM

In order to achieve the object described above, a three-dimensional point cloud aligning device according to the present disclosure includes: an acquisition unit that acquires plural sets of three-dimensional point cloud data that are respective sensing results from plural sensors that detect three-dimensional positions of points in a peripheral environment; an accepting unit that displays each of three-dimensional images representing each of the plural sets of three-dimensional point cloud data on a screen, and that accepts a designation in each of the three-dimensional images of an area that serves as a reference for alignment between the plural sets of three-dimensional point cloud data; and an adjusting unit that aligns partial sets of three-dimensional point cloud data with one another, the partial sets of three-dimensional point cloud data corresponding to the area in each of the plural sets of three-dimensional point cloud data.

The accepting unit may accept the designation of the area by displaying a three-dimensional frame on the screen, a position of the frame and sizes of the frame in the directions of three dimensions being respectively alterable, and accepting operations to alter the three-dimensional frame.

The accepting unit may display the each three-dimensional image and three-dimensional frame on the screen so as to enable enlargement, diminution and rotation of the three-dimensional image and three-dimensional frame.

The three-dimensional point cloud aligning device according to the present disclosure may further include a presenting unit that presents extracted areas as candidates for the area that serves as the reference, the area representing an object, and the extracted areas being extracted by a machine learning model that is trained to extract areas of objects contained in three-dimensional point cloud data, and the accepting unit may accept operations to alter the three-dimensional frame displayed on the screen, the three-dimensional frame corresponding to one of the candidates.

The adjusting unit may compute a homogeneous transformation matrix between the partial sets of three-dimensional point cloud data.

The three-dimensional point cloud aligning device according to the present disclosure may further include an integrating unit that integrates the plural sets of three-dimensional point cloud data on the basis of a result of the alignment by the adjusting unit.

The adjusting unit may align the partial sets of three-dimensional point cloud data with one another after noise reduction thereof.

When a new sensor is added to the plural sensors for which the alignment by the adjusting unit has been completed: the accepting unit may accept designations of the area in the three-dimensional image from any one of the plural sensors and in a three-dimensional image from the new sensor; and the adjusting unit may align partial sets of three-dimensional point cloud data corresponding to the area in the set of three-dimensional point cloud data from the any one of the plural sensors and in a set of three-dimensional point cloud data from the new sensor with one another.

A three-dimensional point cloud aligning method according to the present disclosure is implemented by a three-dimensional point cloud aligning device that includes an acquisition unit, an accepting unit and an adjusting unit, the method including: the acquisition unit acquiring plural sets of three-dimensional point cloud data that are respective sensing results from plural sensors that detect three-dimensional positions of points in a peripheral environment; the accepting unit displaying each of three-dimensional images representing each of the plural sets of three-dimensional point cloud data on a screen, and accepting a designation in each of the three-dimensional images of an area that serves as a reference for alignment between the plural sets of three-dimensional point cloud data; and the adjusting unit aligning partial sets of three-dimensional point cloud data with one another, the partial sets of three-dimensional point cloud data corresponding to the area in each of the plural sets of three-dimensional point cloud data.

A three-dimensional point cloud aligning program according to the present disclosure, when executed by a computer, causes the computer to execute processing including the functions of: an acquisition unit that acquires plural sets of three-dimensional point cloud data that are respective sensing results from plural sensors that detect three-dimensional positions of points in a peripheral environment; an accepting unit that displays each of three-dimensional images representing each of the plural sets of three-dimensional point cloud data on a screen, and that accepts a designation in each of the three-dimensional images of an area that serves as a reference for alignment between the plural sets of three-dimensional point cloud data; and an adjusting unit that aligns partial sets of three-dimensional point cloud data with one another, the partial sets of three-dimensional point cloud data corresponding to the area in each of the plural sets of three-dimensional point cloud data.

### ADVANTAGEOUS EFFECTS OF INVENTION

The three-dimensional point cloud aligning device, three-dimensional point cloud aligning method and three-dimensional point cloud aligning program according to the present disclosure may improve accuracy of alignment between plural sets of three-dimensional point cloud data.

### BRIEF DESCRIPTION OF DRAWINGS

Fig. 1 is a diagram showing an example of a work environment in which a present exemplary embodiment is employed.
Fig. 2 is a block diagram showing hardware structures of a three-dimensional point cloud aligning device.
Fig. 3 is a block diagram showing an example of functional structures of the three-dimensional point cloud aligning device.
Fig. 4 is a diagram showing an example of measurement of three-dimensional point cloud data.
Fig. 5 is a diagram showing examples of three-dimensional point cloud data from respective cameras.
Fig. 6 is a diagram showing an example of an acceptance screen when an area is being designated.
Fig. 7 is a diagram showing an example of the acceptance screen when candidates are being displayed.
Fig. 8 is a diagram showing an example of the acceptance screen when an integrated three-dimensional image is being displayed.
Fig. 9 is a flowchart showing a flow of three-dimensional point cloud aligning processing.

### DETAILED DESCRIPTION

Below, an example of an embodiment of the present disclosure is described with reference to the drawings. In the drawings, the same reference symbols are assigned to structural elements and portions that are the same or equivalent. Dimensions and proportions in the drawings may be exaggerated to aid understanding and may be different from actual proportions.

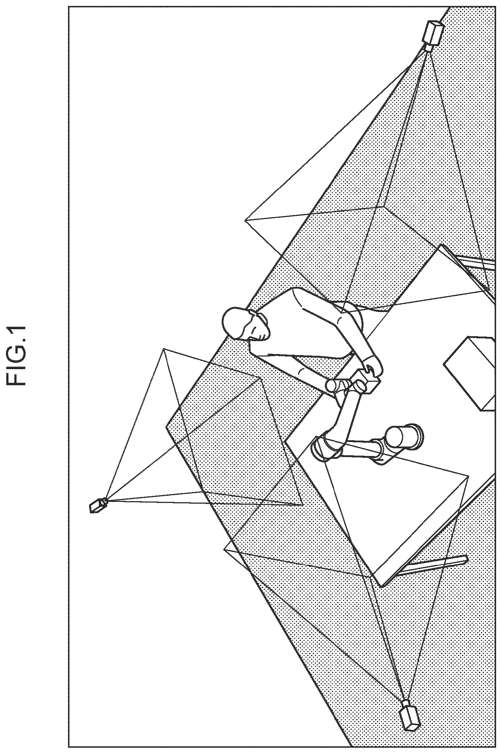

The present exemplary embodiment assumes a situation in which, for example, a work environment as illustrated in Fig. 1 is imaged with cameras from each of plural viewpoints and sets of three-dimensional point cloud data are measured by the cameras. In the present exemplary embodiment, an example is described in which a sensor is a camera capable of acquiring three-dimensional point cloud data. However, a sensor may be a laser radar or the like. The sets of three-dimensional point cloud data from the plural viewpoints may be measured and integrated. As a result, a region that is a blind spot for one of the cameras and is missing from the three-dimensional point cloud data from that camera may be interpolated.

In order to integrate the plural sets of three-dimensional point cloud data, the sets of three-dimensional point cloud data must be accurately aligned with one another. In a usual aligning technique, a feature point is extracted from each set of three-dimensional point cloud data, and the feature points are associated between the sets of three-dimensional point cloud data. However, when there are plural objects with matching or similar appearances in the environment, such as desks, displays or the like, there may be errors in the association of feature points, and the alignment may fail.

For example, when a feature point is extracted from an object with a shape with rotational symmetry, such as the seat and back of a chair, a feature point of the seat in the three-dimensional point cloud data of one camera may be associated with a feature point of the back in the three-dimensional point cloud data of another camera. During alignment in this case, one set of the three-dimensional point cloud data may become vertically inverted.

When an alignment is adjusted by repeated processing, if the accuracy of the alignment is low as described above, a number of repetitions may become large or such, and a large amount of time is required for the alignment.

The present exemplary embodiment proposes a technique for improving accuracy in aligning sets of three-dimensional point cloud data with a simple method. A three-dimensional point cloud aligning device according to the present exemplary embodiment is described below.

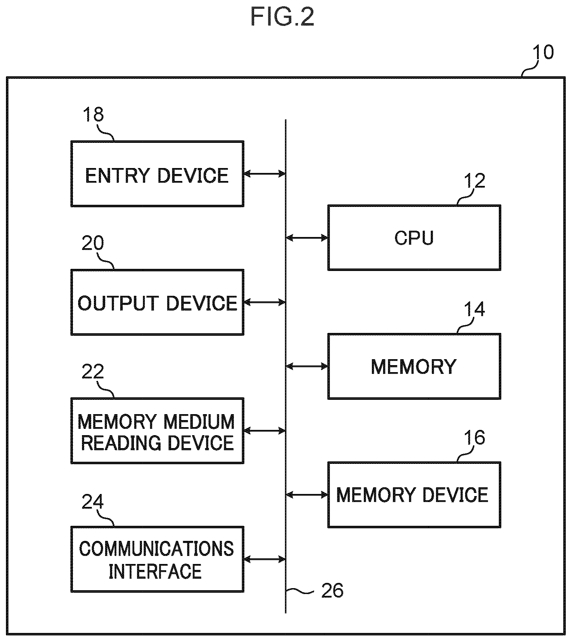

Fig. 2 is a block diagram showing hardware structures of a three-dimensional point cloud aligning device 10 according to the present exemplary embodiment. As shown in Fig. 2, the three-dimensional point cloud aligning device 10 includes a central processing unit (CPU) 12, memory 14, a memory device 16, an entry device 18, an output device 20, a memory medium reading device 22 and a communications interface (I/F) 24. These structures are connected to be capable of communicating with one another via a bus 26.

A three-dimensional point cloud aligning program for executing three-dimensional point cloud aligning processing is stored in the memory device 16. The CPU 12 is a central arithmetic processing unit, which executes various programs and controls various structures. That is, the CPU 12 reads the program from the memory device 16 and executes the program using the memory 14 as a work area. The CPU 12 conducts control of the above-mentioned structures and various computations in accordance with the program memorized at the memory device 16.

The memory 14 is structured by random access memory (RAM) and serves as a work area, temporarily memorizing the program and data. The memory device 16 is structured by read-only memory (ROM), a hard disk drive (HDD), a solid state drive (SSD) or the like. The memory device 16 stores various programs, including an operating system, and various kinds of data.

The entry device 18 is equipment for conducting various kinds of input such as, for example, a keyboard and mouse or the like. The output device 20 is equipment for outputting various kinds of information such as, for example, a display, a printer or the like. When a touch panel display is employed as the output device 20, the touch panel display may also function as the entry device 18.

The memory medium reading device 22 reads data memorized at various types of memory medium, such as a compact disc (CD)-ROM, digital versatile disc (DVD-ROM), Blu-ray disc, universal serial bus (USB) memory or the like, writes data to the memory medium, and so forth. The communications interface 24 is an interface for communicating with other equipment using a standard such as, for example, Ethernet (registered trademark), FDDI, Wi-Fi (registered trademark) or the like.

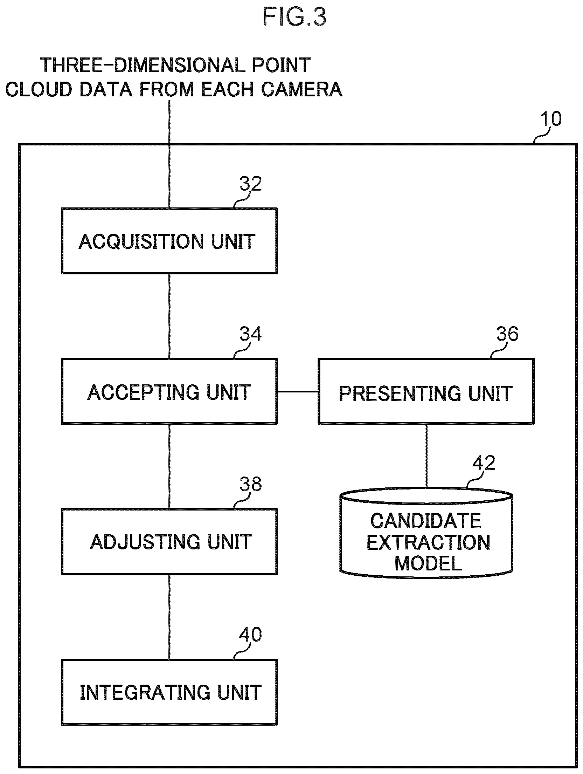

Now, functional structures of the three-dimensional point cloud aligning device 10 according to the present exemplary embodiment are described. Fig. 3 is a block diagram showing an example of functional structures of the three-dimensional point cloud aligning device 10. As shown in Fig. 3, as functional structures, the three-dimensional point cloud aligning device 10 includes an acquisition unit 32, an accepting unit 34, a presenting unit 36, an adjusting unit 38 and an integrating unit 40. A candidate extraction model 42 is memorized in a memory region of the three-dimensional point cloud aligning device 10. The functional structures are manifested by the CPU 12 reading the three-dimensional point cloud aligning program memorized in the memory device 16, loading the three-dimensional point cloud aligning program into the memory 14 and executing the program.

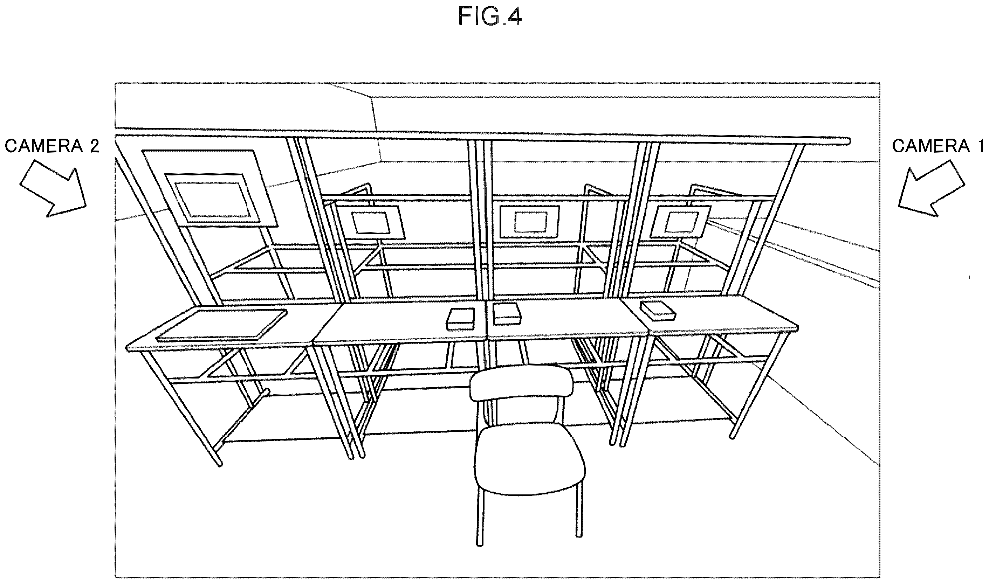

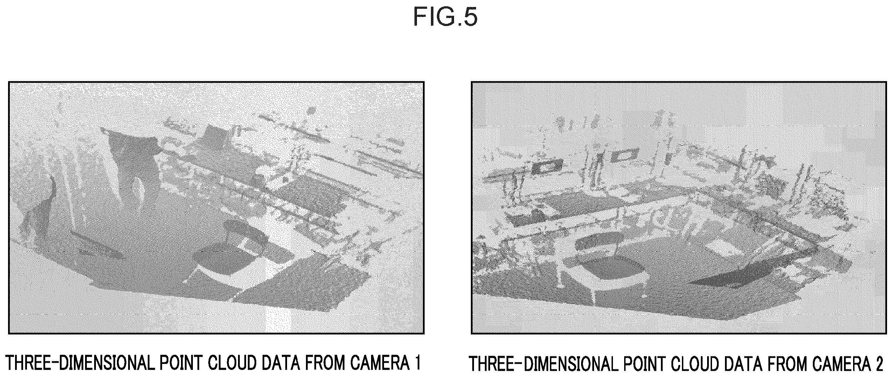

The acquisition unit 32 acquires plural sets of three-dimensional point cloud data, which are sensing results from each of plural cameras detecting three-dimensional positions of points in a peripheral environment. For example, the environment shown in Fig. 4 is respectively imaged from different viewpoints by a camera 1 and a camera 2, measuring respective sets of three-dimensional point cloud data. The acquisition unit 32 acquires respective sets of three-dimensional point cloud data from camera 1 and camera 2, for example, as shown in Fig. 5.

The accepting unit 34 displays each of three-dimensional images representing each of the plural sets of three-dimensional point cloud data on a screen. The accepting unit 34 then accepts a designation of an area in each of the three-dimensional images that represents an object (below referred to as a target) among objects contained in the peripheral environment. The target serves as a reference for alignment between the plural sets of three-dimensional point cloud data.

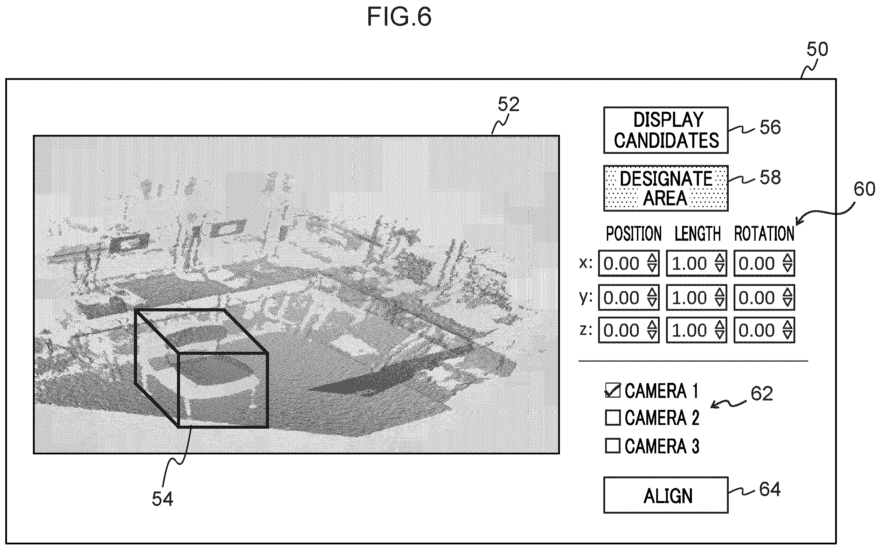

For example, the accepting unit 34 displays an acceptance screen 50 as illustrated in Fig. 6 at a display, which is an example of the output device 20. In the example in Fig. 6, the acceptance screen 50 includes a display area 52, an area designation box 54, a candidate display button 56, a designate area button 58, a value setting area 60, a camera selection area 62 and an align button 64. The accepting unit 34 is manifested by, for example, the CPU 12.

The display area 52 displays a three-dimensional image representing the three-dimensional point cloud data of a camera, the area designation box 54, candidate frames 66, which are described below, an integrated three-dimensional image, and the like. The integrated three-dimensional image represents integrated three-dimensional point cloud data in which the plural sets of three-dimensional point cloud data are integrated.

The area designation box 54 is a three-dimensional frame whose position in the display area 52 and sizes in the directions of three dimensions are respectively alterable. The accepting unit 34 accepts operations to alter the area designation box 54, in accordance with drag operations or entry of values into the value setting area 60. A user may modify the area designation box 54 so as to encircle the target by enlarging, diminishing and rotating the area designation box 54, or the like. The three-dimensional image representing the three-dimensional point cloud data may also be enlarged, diminished, rotated and the like. The accepting unit 34 accepts a three-dimensional area inside the area designation box 54 as being the area of the target. The accepting unit 34 temporarily memorizes the most recent position information of the area designated by the area designation box 54 in a predetermined memory area, and if the area designation is resumed, displays the area designation box 54 on the basis of the memorized position information. Fig. 6 shows an example in which the area designation box 54 has a cube shape, but this is not limiting. The area designation box 54 may have a spherical shape, a capsule shape and so forth.

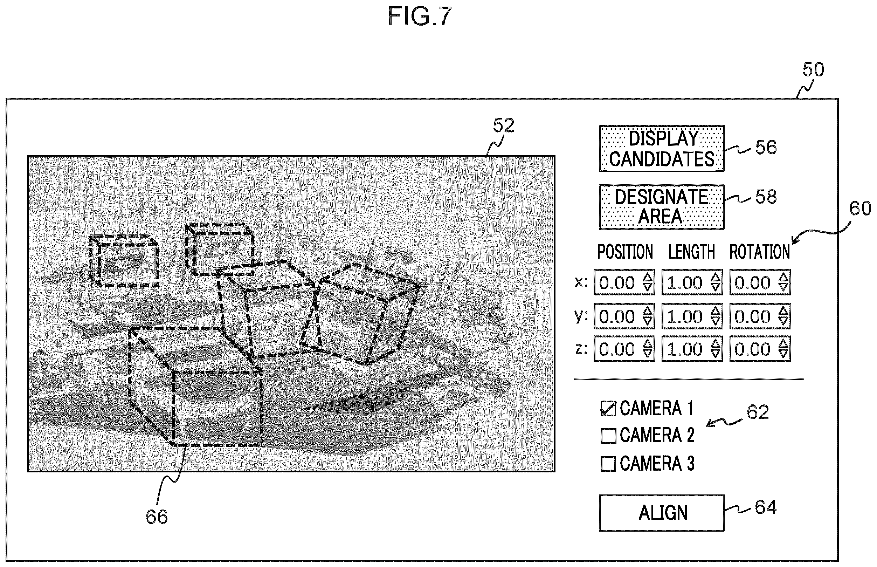

The candidate display button 56 is a button that is selected when target candidates are to be displayed. When the candidate display button 56 is selected, the candidate frames 66 are displayed encircling areas corresponding to candidates in the display area 52 by the presenting unit 36, as described below. Fig. 7 shows an example of the acceptance screen 50 when the candidate display button 56 has been selected. In Fig. 7, the candidate frames 66 are indicated by broken lines. Fig. 7 shows an example in which, similarly to the area designation box 54, the candidate frames 66 have cube shapes, but this is not limiting. The candidate frames 66 may have spherical shapes, capsule shapes and so forth.

When one or a plural number of the candidate frames 66 is selected, the accepting unit 34 changes each selected candidate frame 66 to the area designation box 54, and accepts operations to alter the area designation box 54 as described above. Thus, by a temporary display of candidates, selection of a target by the user may be made easy. Moreover, because it is sufficient to apply alteration operations to the area designation box 54 encircling an object that has been changed from the candidate frame 66, at a precise adjustment stage the area of the target may be designated by simple operations.

The designate area button 58 is a button that is selected when an area is to be designated. When the designate area button 58 is selected, as shown in Fig. 6, the accepting unit 34 displays the three-dimensional image representing the three-dimensional point cloud data of a camera selected in the camera selection area 62 at the display area 52, and displays the area designation box 54 in the display area 52, enabling alteration operations.

The value setting area 60 is an area for directly setting values in order to respectively alter the position of the area designation box 54 in the display area 52 and sizes thereof in the directions of three dimensions. That is, the area designation box 54 allows alteration operations by drag operations, and allows alteration operations by entry of values into the value setting area 60.

The camera selection area 62 is an area for selecting cameras corresponding to the sets of three-dimensional point cloud data that are being processed. When the user selects the designate area button 58, the user selects a camera corresponding to the three-dimensional point cloud data in which an area is being designated. When the user selects the align button 64, the user selects cameras corresponding to the sets of three-dimensional point cloud data that are to be aligned.

The align button 64 is a button that is selected when alignment of plural sets of the three-dimensional point cloud data is to be performed. When the align button 64 is selected, for each of the plural sets of three-dimensional data corresponding to the cameras selected in the camera selection area 62, the accepting unit 34 transfers a partial set of information of the three-dimensional point cloud data, which corresponds to the area of the target designated by the area designation box 54, to the adjusting unit 38.

When the candidate display button 56 is selected in the acceptance screen 50, the presenting unit 36 inputs three-dimensional point cloud data into the candidate extraction model 42 and extracts candidates from the three-dimensional point cloud data. The candidate extraction model 42 may be a machine learning model that is trained in advance to extract areas of objects from three-dimensional point cloud data. The candidate extraction model 42 may be trained to narrow down objects extracted as candidates to objects that are suitable as targets, for example, excluding plural objects with matching or similar outlines that are present in the environment. The presenting unit 36 displays the candidate frames 66 encircling corresponding regions of the extracted candidates in the three-dimensional image in the display area 52.

The adjusting unit 38 aligns the partial sets of three-dimensional point cloud data corresponding to the respective cameras with one another. More specifically, the adjusting unit 38 sets one of the plural cameras as a reference and computes a homogeneous transformation matrix representing displacements of position and rotation of the other cameras relative to the reference camera. The adjusting unit 38 computes the homogeneous transformation matrix by, for example, extracting and associating feature points from the partial sets of three-dimensional point cloud data by fast point feature histograms (FPFH). The adjusting unit 38 may apply an iterative closest point (ICP) algorithm to improve the accuracy of the homogeneous transformation matrix computed by FPFH.

The adjusting unit 38 may perform the alignment after removing noise from the partial three-dimensional point cloud data. As a result, erroneous association of feature points may be further suppressed.

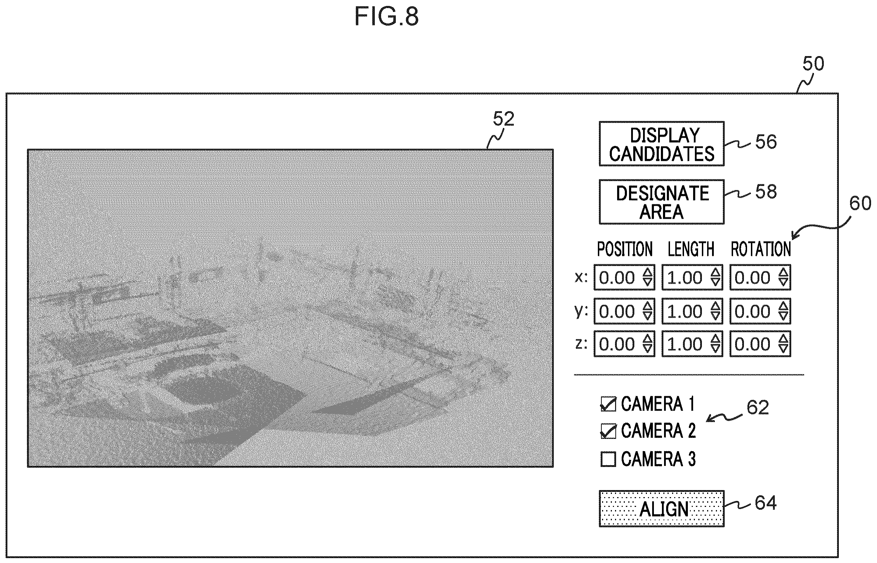

The integrating unit 40 integrates the plural sets of three-dimensional point cloud data on the basis of the results of the alignment by the adjusting unit 38. More specifically, the integrating unit 40 applies the homogeneous transformation matrix computed by the adjusting unit 38 to the three-dimensional point cloud data from the reference camera and the three-dimensional point cloud data from each other camera to integrate the sets of three-dimensional point cloud data, generating the integrated three-dimensional point cloud data. As shown in Fig. 8, the integrating unit 40 displays an integrated three-dimensional image representing the integrated three-dimensional point cloud data in the display area 52 of the acceptance screen 50.

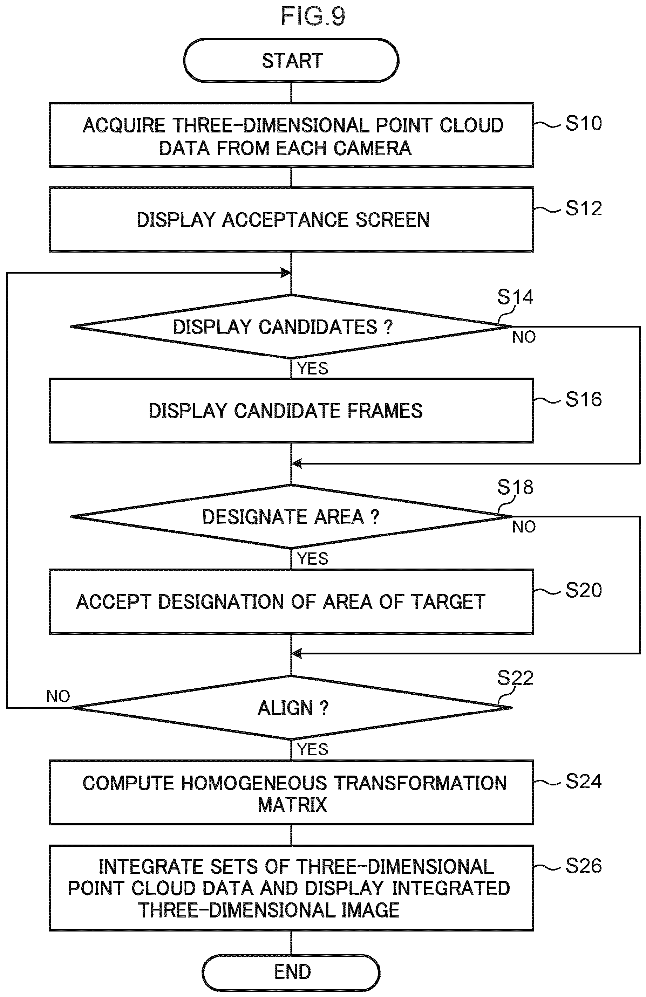

Now, operation of the three-dimensional point cloud aligning device 10 according to the present exemplary embodiment is described. Fig. 9 is a flowchart showing a flow of three-dimensional point cloud aligning processing that is executed by the CPU 12 of the three-dimensional point cloud aligning device 10. The CPU 12 reads the three-dimensional point cloud aligning program from the memory device 16, loads the program into the memory 14 and executes the program. As a result, the CPU 12 functions as the functional structures of the three-dimensional point cloud aligning device 10 and executes the three-dimensional point cloud aligning processing shown in Fig. 9.

In step S10, the acquisition unit 32 acquires the three-dimensional point cloud data from each camera. In step S12, the accepting unit 34 displays, for example, the acceptance screen 50 as illustrated in Fig. 6. In step S14, the accepting unit 34 makes a determination as to whether or not the candidate display button 56 of the acceptance screen 50 has been selected. When the candidate display button 56 is selected, the CPU 12 proceeds to step S16, and when the candidate display button 56 is not selected, the CPU 12 proceeds to step S18.

In step S16, the accepting unit 34 displays a three-dimensional image in the display area 52 representing the three-dimensional point cloud data of a camera selected in the camera selection area 62. In addition, the presenting unit 36 inputs this three-dimensional point cloud data into the candidate extraction model 42, extracts target candidates from the three-dimensional point cloud data, and displays the candidate frames 66 encircling regions corresponding to the extracted candidates in the three-dimensional image in the display area 52.

In step S18, the accepting unit 34 makes a determination as to whether or not the designate area button 58 has been selected. When the designate area button 58 is selected, the CPU 12 proceeds to step S20, and when the designate area button 58 is not selected, the CPU 12 proceeds to step S22. In step S20, the accepting unit 34 accepts a selection of one or a plural number of the candidate frames 66, changes each selected candidate frame 66 to the area designation box 54, and accepts operations to alter the area designation box 54. Thus, the accepting unit 34 accepts a designation of the area of a target. The accepting unit 34 accepts a selection of a camera in the camera selection area 62, and accepts a designation of the area of a target in the three-dimensional point cloud data from that camera.

In step S22, the accepting unit 34 makes a determination as to whether or not the align button 64 has been selected. When the align button 64 is selected, the CPU 12 proceeds to step S24, and when the align button 64 is not selected, the CPU 12 returns to step S14.

In step S24, for each of the plural sets of three-dimensional point cloud data corresponding to the cameras, the accepting unit 34 transfers a partial set of information of the three-dimensional point cloud data corresponding to the designated area of the target to the adjusting unit 38. The adjusting unit 38 sets one of the plural cameras as a reference and computes the homogeneous transformation matrix representing displacements of position and rotation of the other cameras relative to the reference camera.

In step S26, the integrating unit 40 applies the homogeneous transformation matrix computed in step S24 to the three-dimensional point cloud data of the camera that is the reference and the three-dimensional point cloud data of each other camera to integrate the sets of three-dimensional point cloud data and generate the integrated three-dimensional point cloud data. The integrating unit 40 displays the integrated three-dimensional image representing the integrated three-dimensional point cloud data in the display area 52, and the three-dimensional point cloud aligning processing ends.

As described above, the three-dimensional point cloud aligning device according to the present exemplary embodiment acquires plural sets of three-dimensional point cloud data that are sensing results from each of plural sensors that detect three-dimensional positions of points in a peripheral environment. The three-dimensional point cloud aligning device then displays each of three-dimensional images representing each of the plural sets of three-dimensional point cloud data on a screen, and accepts a designation of an area in each of the three-dimensional images representing, among objects contained in the peripheral environment, an object that is to serve as a reference for alignment between the plural sets of three-dimensional point cloud data. The three-dimensional point cloud aligning device then aligns partial sets of three-dimensional point cloud data, corresponding to the respective areas in the plural sets of three-dimensional point cloud data, with one another. Thus, the three-dimensional point cloud aligning device according to the present exemplary embodiment aligns the plural three-dimensional point clouds with one another using only three-dimensional point cloud data contained in the area of the target, which is designated by simple operations by a user. Therefore, without association errors, the accuracy of alignment of the plural sets of three-dimensional point cloud data with one another may be improved.

Even when, for example, an object including shapes with rotational symmetry, such as the seat and back of a chair, is the target, an area containing the chair legs may be designated, and a situation in which vertical inversion occurs when the sets of three-dimensional point cloud data are aligned with one another may be suppressed.

When an alignment of sets of three-dimensional point cloud data with one another is adjusted by repeated processing, convergence of the adjustment is quicker due to alignment with higher accuracy in the present exemplary embodiment, and an amount of time required for aligning may be reduced.

When a new camera is added to plural cameras that have already been aligned, it is sufficient to designate an area in each of a three-dimensional image from any one of the plural cameras whose alignment has been adjusted and a three-dimensional image from the new camera. Then, partial sets of three-dimensional point cloud data corresponding to the designated area in the three-dimensional point cloud data from the one of the plural cameras and the three-dimensional point cloud data from the new camera are aligned with one another. Therefore, when a new camera is added, there is no need to completely repeat the alignment of the cameras, and the equipment may be quickly set up after a change.

As illustrated in Fig. 1, the three-dimensional point cloud data aligning device according to the present exemplary embodiment may be employed in environments in which people and robots interact to perform work. When the plural sets of three-dimensional point cloud data obtained by the plural cameras are integrated, three-dimensional point cloud data without blind spots can be obtained. This three-dimensional point cloud data may be used to perceive the work environment, and when this is reflected in control of a robot, a work space for the robot may be created appropriately.

In the exemplary embodiment described above, a situation is described in which an object that is to serve as a reference for aligning is a target and an area of the target is designated, but an area that serves as a reference need not necessarily contain an object.

The three-dimensional point cloud aligning processing that, in the exemplary embodiment described above, is executed by a CPU reading software (a program) may be executed by various kinds of processor other than a CPU. Examples of processors in these cases include a PLD (programmable logic device) in which a circuit configuration can be modified after manufacturing, such as an FPGA (field-programmable gate array) or the like, a dedicated electronic circuit which is a processor with a circuit configuration that is specially designed to execute specific processing, such as an ASIC (application-specific integrated circuit) or the like, and so forth. The three-dimensional point cloud aligning processing may be executed by one of these various kinds of processors, and may be executed by a combination of two or more processors of the same or different kinds (for example, plural FPGAs, a combination of a CPU with an FPGA, or the like). Hardware structures of these various kinds of processors are, to be more specific, electronic circuits combining circuit components such as semiconductor components and the like.

In the exemplary embodiment described above, a mode is described in which the three-dimensional point cloud aligning program is memorized in advance (installed) at a memory device, but this is not limiting. The program may be provided in a form memorized on a recording medium such as a CD-ROM, DVD-ROM, Blu-ray disc, Flash memory or the like. Modes are also possible in which the program is downloaded from external equipment via a network.

Supplementary notes on the present disclosure are recited below.

### - Supplementary note 1 -

A three-dimensional point cloud aligning device includes:
an acquisition unit that acquires plural sets of three-dimensional point cloud data that are respective sensing results from plural sensors that detect three-dimensional positions of points in a peripheral environment;
an accepting unit that displays each of three-dimensional images representing each of the plural sets of three-dimensional point cloud data on a screen, and that accepts a designation in each of the three-dimensional images of an area that serves as a reference for alignment between the plural sets of three-dimensional point cloud data; and
an adjusting unit that aligns partial sets of three-dimensional point cloud data with one another, the partial sets of three-dimensional point cloud data corresponding to the area in each of the plural sets of three-dimensional point cloud data.

### - Supplementary note 2 -

In the three-dimensional point cloud aligning device according to supplementary note 1, the accepting unit accepts the designation of the area by displaying a three-dimensional frame on the screen, a position of the frame and sizes of the frame in the directions of three dimensions being respectively alterable, and accepting operations to alter the three-dimensional frame.

### - Supplementary note 3 -

In the three-dimensional point cloud aligning device according to supplementary note 2, the accepting unit displays the each three-dimensional image and three-dimensional frame on the screen so as to enable enlargement, diminution and rotation of the three-dimensional image and three-dimensional frame.

### - Supplementary note 4 -

The three-dimensional point cloud aligning device according to supplementary note 2 or supplementary note 3 further includes
a presenting unit that presents extracted areas as candidates for the area that serves as the reference, the area representing an object, and the extracted areas being extracted by a machine learning model that is trained to extract areas of objects contained in three-dimensional point cloud data,
wherein the accepting unit accepts operations to alter the three-dimensional frame displayed on the screen, the three-dimensional frame corresponding to one of the candidates.

### - Supplementary note 5 -

In the three-dimensional point cloud aligning device according to any one of supplementary notes 1 to 4, the adjusting unit computes a homogeneous transformation matrix between the partial sets of three-dimensional point cloud data.

### - Supplementary note 6 -

The three-dimensional point cloud aligning device according to any one of supplementary notes 1 to 5 further includes an integrating unit that integrates the plural sets of three-dimensional point cloud data on the basis of a result of the alignment by the adjusting unit.

### - Supplementary note 7 -

In the three-dimensional point cloud aligning device according to any one of supplementary notes 1 to 6, the adjusting unit aligns the partial sets of three-dimensional point cloud data with one another after noise reduction thereof.

### - Supplementary note 8 -

In the three-dimensional point cloud aligning device according to any one of supplementary notes 1 to 7, when a new sensor is added to the plural sensors for which the alignment by the adjusting unit has been completed:
the accepting unit accepts designations of the area in the three-dimensional image from any one of the plural sensors and in a three-dimensional image from the new sensor; and
the adjusting unit aligns partial sets of three-dimensional point cloud data corresponding to the area in the set of three-dimensional point cloud data from the any one of the plural sensors and in a set of three-dimensional point cloud data from the new sensor with one another.

### Explanation of the Reference Symbols

- 10: Three-dimensional point cloud aligning device
- 12: CPU
- 14: Memory
- 16: Memory device
- 18: Entry device
- 20: Output device
- 22: Memory medium reading device
- 24: Communications interface
- 26: Bus
- 32: Acquisition unit
- 34: Accepting unit
- 36: Presenting unit
- 38: Adjusting unit
- 40: Integrating unit
- 42: Candidate extraction model
- 50: Acceptance screen
- 52: Display area
- 54: Area designation box
- 56: Candidate display button
- 58: Designate area button
- 60: Value setting area
- 62: Camera selection area
- 64: Align button
- 66: Candidate frame

## Claims

1. A three-dimensional point cloud aligning device, comprising:
an acquisition unit that acquires a plurality of sets of three-dimensional point cloud data that are respective sensing results from a plurality of sensors that detect three-dimensional positions of points in a peripheral environment;
an accepting unit that displays each of three-dimensional images representing each of the plurality of sets of three-dimensional point cloud data on a screen, and that accepts a designation in each of the three-dimensional images of an area that serves as a reference for alignment between the plurality of sets of three-dimensional point cloud data; and
an adjusting unit that aligns partial sets of three-dimensional point cloud data with one another, the partial sets of three-dimensional point cloud data corresponding to the area in each of the plurality of sets of three-dimensional point cloud data.

2. The three-dimensional point cloud aligning device according to claim 1, wherein the accepting unit accepts the designation of the area by:
displaying a three-dimensional frame on the screen, a position of the frame and sizes of the frame in directions of three dimensions being respectively alterable, and
accepting operations to alter the three-dimensional frame.

3. The three-dimensional point cloud aligning device according to claim 2, wherein the accepting unit displays each three-dimensional image and the three-dimensional frame on the screen so as to enable enlargement, diminution and rotation of each three-dimensional image and the three-dimensional frame.

4. The three-dimensional point cloud aligning device according to claim 2, further comprising a presenting unit that presents extracted areas as candidates for the area that serves as the reference, the area representing an object, and the extracted areas being extracted by a machine learning model that is trained to extract areas of objects contained in three-dimensional point cloud data,
wherein the accepting unit accepts operations to alter the three-dimensional frame displayed on the screen, the three-dimensional frame corresponding to one of the candidates.

5. The three-dimensional point cloud aligning device according to claim 1, wherein the adjusting unit computes a homogeneous transformation matrix between the partial sets of three-dimensional point cloud data.

6. The three-dimensional point cloud aligning device according to claim 1, further comprising an integrating unit that integrates the plurality of sets of three-dimensional point cloud data based on a result of alignment by the adjusting unit.

7. The three-dimensional point cloud aligning device according to claim 1, wherein the adjusting unit aligns the partial sets of three-dimensional point cloud data with one another after noise reduction thereof.

8. The three-dimensional point cloud aligning device according to claim 1, wherein, in a case in which a new sensor is added to the plurality of sensors for which alignment by the adjusting unit has been completed:
the accepting unit accepts designations of the area in the three-dimensional image from any one of the plurality of sensors and in a three-dimensional image from the new sensor; and
the adjusting unit aligns partial sets of three-dimensional point cloud data corresponding to the area in the set of three-dimensional point cloud data from the any one of the plurality of sensors and in a set of three-dimensional point cloud data from the new sensor with one another.

9. A three-dimensional point cloud aligning method implemented by a three-dimensional point cloud aligning device that includes an acquisition unit, an accepting unit and an adjusting unit, the method comprising:
the acquisition unit acquiring a plurality of sets of three-dimensional point cloud data that are respective sensing results from a plurality of sensors that detect three-dimensional positions of points in a peripheral environment;
the accepting unit displaying each of three-dimensional images representing each of the plurality of sets of three-dimensional point cloud data on a screen, and accepting a designation in each of the three-dimensional images of an area that serves as a reference for alignment between the plurality of sets of three-dimensional point cloud data; and
the adjusting unit aligning partial sets of three-dimensional point cloud data with one another, the partial sets of three-dimensional point cloud data corresponding to the area in each of the plurality of sets of three-dimensional point cloud data.

10. three-dimensional point cloud aligning program that causes a computer to function as:
an acquisition unit that acquires a plurality of sets of three-dimensional point cloud data that are respective sensing results from a plurality of sensors that detect three-dimensional positions of points in a peripheral environment;
an accepting unit that displays each of three-dimensional images representing each of the plurality of sets of three-dimensional point cloud data on a screen, and that accepts a designation in each of the three-dimensional images of an area that serves as a reference for alignment between the plurality of sets of three-dimensional point cloud data; and
an adjusting unit that aligns partial sets of three-dimensional point cloud data with one another, the partial sets of three-dimensional point cloud data corresponding to the area in each of the plurality of sets of three-dimensional point cloud data.
